# EUROPEAN PATENT APPLICATION

(11) **EP 1 627 828 A1**
(43) Date of publication of application: **22.02.2006**
(21) Application number: 05077055.1
(22) Date of filing: 25.01.2001
(51) Int. Cl.: B65F 9/00, B65F 3/28, B60P 1/36

(54) **Material delivery and waste collection system and lorry trailer for use in such a system**

(30) Priority: 25.01.2000 GB 0001604
(62) Divisional of application: 01300673.9
(71) Applicant: Sumpter, Derek Edward, Shorne Gravesend DA12 3HG (GB)
(72) Inventor: Sumpter, Derek Edward, Shorne Gravesend DA12 3HG (GB)
(74) Representative: Jenkins, Peter David

(57) **Abstract**

A material delivery and waste collection system for a premises (82); the system comprising (i) providing a wheeled, enclosed elongate material-carrying container (11) having a walking floor (73), walls (14, 17), a roof (16) and an access door (12), (ii) providing the premises (82) with a delivery bay (81) for transfer of materials from the container (11) into the premises (82); and (iii) providing the premises (82) with at least one waste collection bay for subsequent transfer of waste materials from the premises (82) into the container (11), wherein the waste collection bay includes an output (84) for expulsion of the waste material into the container (11), the waste collection bay being adapted to permit the container (11) to be positioned underneath the output (82) whereby the waste material falls from the output (84) downwardly into the container (11) through the roof (16) of the container (11).

## Description

The present invention relates to material and waste transportation, in particular including an improved routine for delivery of newsprint and the removal of waste paper and apparatus for use in such a routine and other situations.

Transportation of goods by road is normally conducted using large articulated lorries having a trailer hauled by a tractor unit. Typically, having delivered its load, the lorry returns to its home depot empty. This is wasteful of driver and vehicle time, being a period of zero productivity, and is also a waste of fuel, thus raising environmental concerns. The government is keen to encourage hauliers to use full trailers on the return leg of each journey. However, whilst being an admirable aim, it is, in practice, difficult to achieve, for several reasons. Products made by the concern to whom the delivery was made may not require transportation of its own goods in the direction of the lorry's home depot. Furthermore, trailers may be designed specifically for transporting a certain type of product and are not readily adaptable to carrying other goods.

In the newsprint industry, reels of newsprint are typically delivered to a printing works on a trailer with fabric side curtains carried upon a steel frame, typically known as a "Tautliner". Printing works produce a great deal of waste paper. Typically, on a continuous basis as it is produced, a compactor unit compresses waste paper into a 20 foot long bin. Typically, two bins are transported for disposal or recycling upon a single trailer. The trailer will be different from that used to deliver the newsprint. Typically, approximately six of these bins are required to contain the waste generated at a newspaper printing works from processing the newsprint of a single delivery of a typical 13m trailer. Each bin in turn must be mounted upon and demounted from the trailer using a hook lift vehicle before the contents can be disposed of. The system is generally similar to that in our co-pending application GB 2 307 895A. This procedure is unduly time consuming involving many movements of bins. This additionally produces a considerable amount of noise.

It is with these problems in mind, particularly with reference to the newsprint industry, that the present invention has been devised.

Our co-pending application GB 9913532.9 already addresses this problem and describes a material delivery and waste collection system for a premises; the system comprising (i) providing at least two, wheeled, enclosed elongate material-carrying containers each having a floor, walls, a roof and an access door mounted within a frame at the rear of the container; (ii) providing the premises with a delivery bay for transfer of materials from the rear of a first container into the premises; and (iii) providing the premises with at least one waste collection bay; wherein the waste collection bay includes a compactor unit having an input adapted to receive waste material and an output for expulsion of the waste material; the system comprising mutually cooperating connecting means provided on the compactor units and on the rear of the second container; the connecting means providing a substantially rigid connection between the output of the compactor unit and the container. Preferably, the wheeled container is in the form of a trailer of an articulated lorry.

Our co-pending application GB 9913532.9 also describes a trailer for an articulated lorry adapted for use in the system described above. The trailer comprises an enclosed elongate material-carrying container having a floor, walls, a roof and an access door mounted within a frame at the rear of the trailer; wherein the interior surfaces of the walls and roof are substantially flat and uninterrupted and the floor includes a plurality of longitudinally extending guide tracks; wherein further, the rear of the trailer comprises cooperative means for connecting the trailer to the output of a compactor unit. The trailer further comprises means for discharging waste material from the interior of the container. Typically, the container is mounted at the rear of the trailer upon a chassis for pivotal movement with respect thereto. Alternatively, the container may include a tipping ram to tilt the trailer thereby discharging the contents. Preferably, the access door is a vertically slidable door and the frame is itself in the form of an outwardly opening door.

Further development work has led to the present invention in which it has been appreciated that the system and trailer can be further modified to avoid the requirement for the premises to have compactor units.

Accordingly, in one aspect; the present invention provides a material delivery and waste collection system for a premises; the system comprising (i) providing a wheeled, enclosed elongate material-carrying container having a walking floor, walls, a roof and an access door, (ii) providing the premises with a delivery bay for transfer of materials from the container into the premises; and (iii) providing the premises with at least one waste collection bay for subsequent transfer of waste materials from the premises into the container, wherein the waste collection bay includes an output for expulsion of the waste material into the container, the waste collection bay being adapted to permit the container to be positioned underneath the output whereby the waste material falls from the output downwardly into the container through the roof of the container.

In another aspect, the present invention provides an articulated lorry trailer comprising an enclosed elongate material-carrying container carried upon a chassis having a plurality of road wheels; the container having a floor, a front access door, a rear wall and two side walls, and a roof, the interior surfaces of the container being substantially flat; wherein the interior of the container includes a transverse movable wall or headboard defining a cavity between the said movable wall or headboard and the front access door wherein the movable wall or headboard is advanceable between a first position adjacent the access door wherein the capacity of the cavity is at a minimum and a second position remote the access door in which the capacity of the cavity is at a maximum, the roof permitting material from an output positioned, in use, above the cavity at a location generally adjacent the access door to fall from the output downwardly into the cavity through the roof ; and the container further comprising a walking floor arranged to cause longitudinal transport of waste material which has fallen into the cavity.

Preferred aspects are defined in the dependent claims.

The term walking floor, when used herein, means a floor comprising a plurality of parallel longitudinal floor elements or slats arranged to reciprocate so as to produce a walking effect, whereby an article placed upon the floor is caused to advance in a chosen direction. Such arrangements are well known in the field of trailers. A vehicle having such a walking floor is described in US 5551824, to which further reference should be made. The term is also intended to cover other arrangements which produce this effect. Examples of alternative arrangements are shown in EP 0081695, US 3998343 and US 4747747 to which further reference should also be made. These publications also describe the use of moveable walls or headboards.

The above and other aspects of the present invention will now be described in further detail by way of example only with reference to the accompanying drawings, in which:
Figure 1 is a rear view of a trailer in accordance with the present invention;
Figure 2 is a side view of one embodiment of a trailer in accordance with the present invention;
Figure 3 is a side view of another embodiment of a trailer in accordance with the present invention;
Figure 4 is a part cut-away side view of the embodiment of Figure 3;
Figure 5 is a detailed perspective view of the mounting arrangement of the roof hatch of the trailer of Figure 3;
Figure 6 is a side view of the hatch mounting rails of the trailer of Figure 5;
Figure 7 is a part cut-away plan view of the trailer of Figure 3;
Figure 8 is a schematic plan view illustrating the process of the present invention; and
Figure 9 shows in 6 side views, the application of the process of the present invention to a trailer of the present invention.

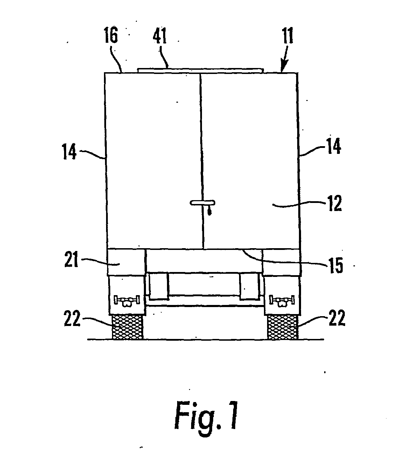

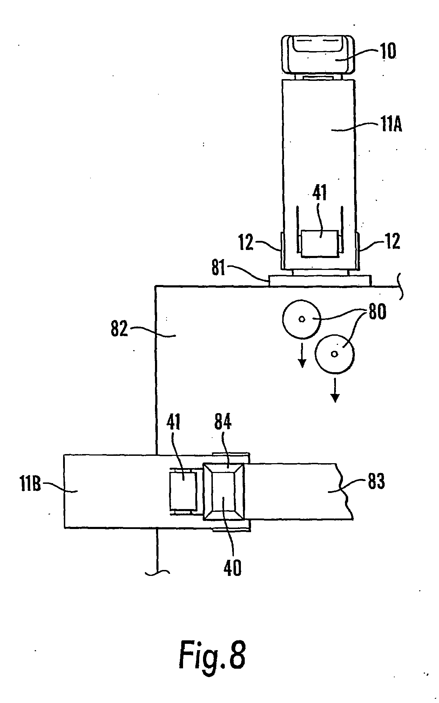

With reference to Figures 1 to 7, the trailer, shown generally at 11, for a lorry tractor unit 10 (Figure 8) will be explained. Firstly, it will be helpful to define that in the context of trailers, the terms 'front' and 'rear' are with respect to the conventional access doors 12, which are taken to be at the front of the trailer. The trailer 11 comprises a container 13 defined by two side walls 14, floor 15, roof 16, rear wall 17 and the front doors 12.

Many features of the trailer 11 are largely conventional and do not need to be described in further detail. Indeed, this is a particular advantage of the present system and trailer. The container 13 is mounted for pivotal movement about an axial horizontal axis 20 upon a chassis 21. Chassis 21 includes additional conventional trailer components such as three pairs of road wheels 22 and front 23 and rear 24 support legs for use when the trailer is not coupled to a tractor unit. Pivotal movement is actuated by means of a pneumatic or hydraulic piston 25, generally vertically mounted but adapted to pivot as required during extension thereof and thus pivoting of the container 13.

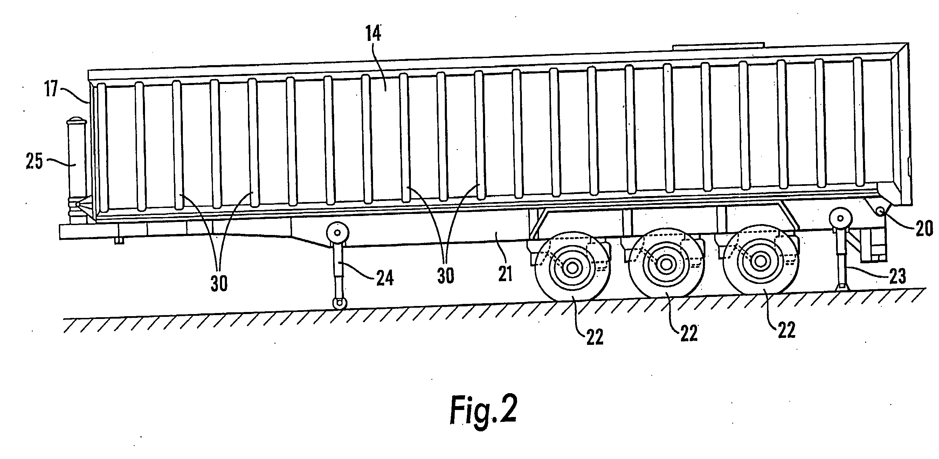

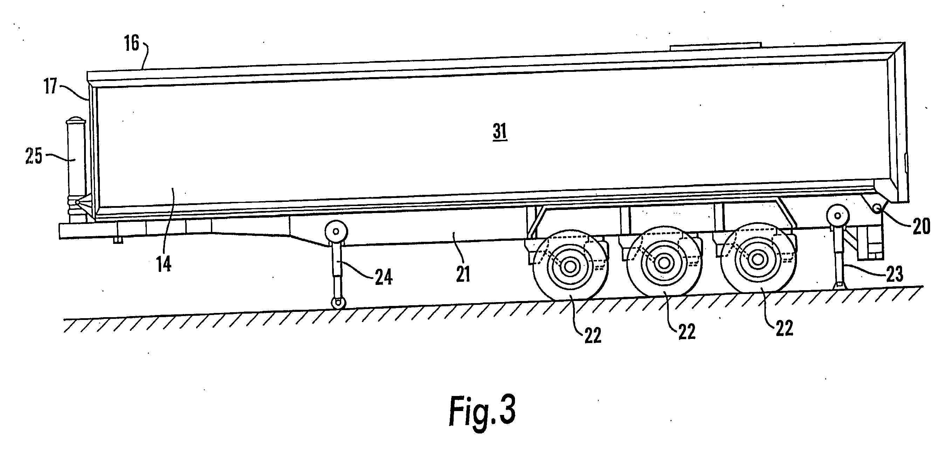

One embodiment of a container 13 is shown in Figure 2 and is typically formed from 5mm aluminium alloy plate and includes reinforcing members 30 spaced at approximately 400mm centres. The embodiment shown in Figure 3 is identical save that, for aesthetic and streamlining reasons, the container is clad externally with an appropriate sheet material 31. The use of aluminium means that the container is equally suitable for the transportation of grain/cereals. Indeed the inventive system will find use in the delivery of products to, for example, supermarkets. Supermarkets produce a large quantity of paper and cardboard waste which is presently compacted into small containers in the same manner as in the waste newsprint industry. In this regard, it will be apparent that the trailer could also be refrigerated.

Typically, the container 13 is around 13m long, 2.55m wide and 2.5m tall.

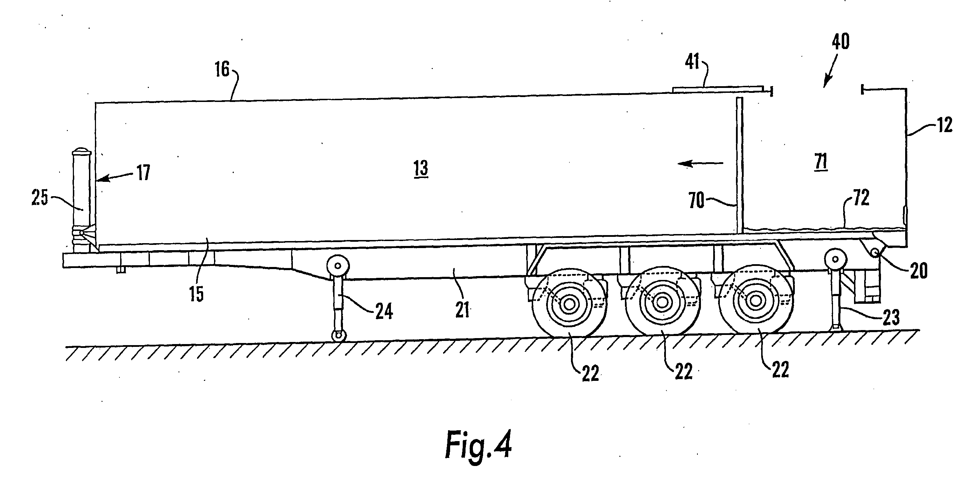

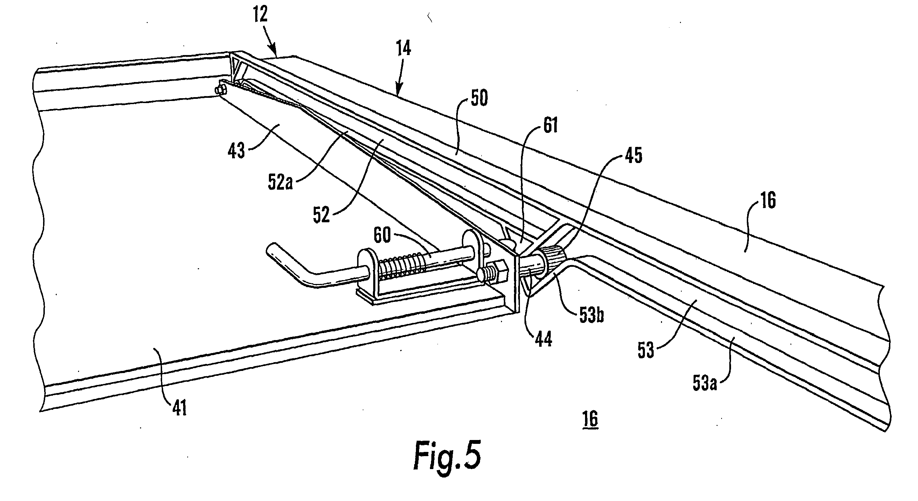

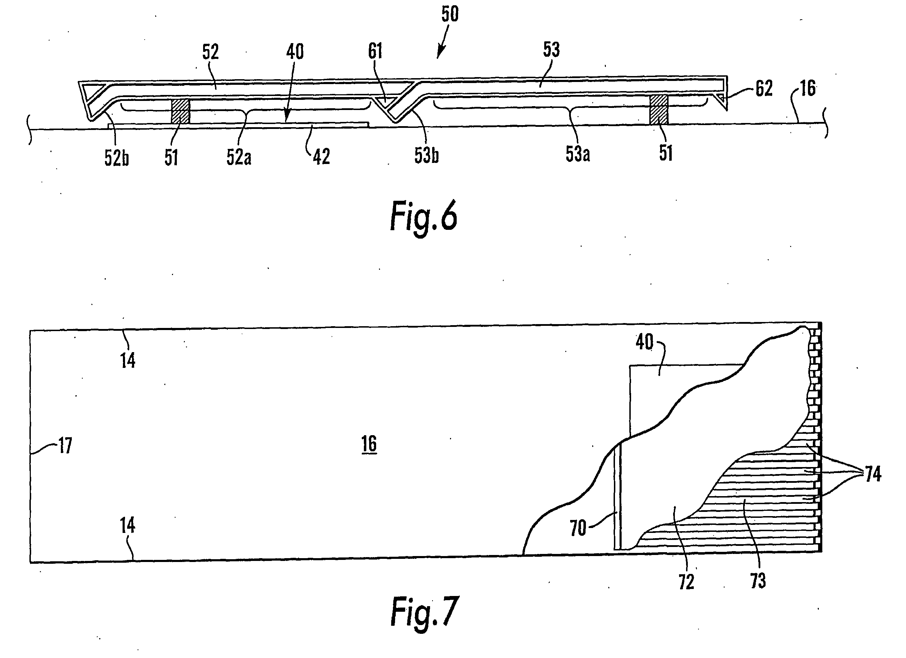

As is most clearly seen from Figures 4 and 5, the roof 16 of the trailer includes a hatch comprising an aperture 40 coverable by a horizontally sliding cover 41 The cover 41 forms a water-tight seal around the aperture 40. Those skilled in the art will be readily able to devise suitable water-tight arrangements. In the embodiment shown, a compressible rubber seal 42 (Figure 6) is provided around the periphery of the aperture 40. The cover 41 is arranged to slide into position over the aperture 40 and then down to compress the seal 42 by means of an assembly as will now be described with reference to Figures 5 and 6.

The cover 41 is provided with an upstanding lip 43 on each side. Each lip carries an outwardly projecting axle 44 towards each end thereof. Each axle carries a wheel 45.

A channel assembly 50 is mounted upon the roof 16 of the trailer and spaced therefrom by spacers 51. The channel assembly 50 includes two separate inwardly directed co-axial channels 52,53. Each channel 52, 53 includes a horizontal portion 52a,53a which terminates at its end adjacent the front of the trailer in an inclined portion 52b,53b.
Figures 5 and 6 show the left-hand channel assembly 50 (as viewed facing the doors 12 of the trailer). The right-hand assembly 50 is the mirror image.

Each channel 52,53 is associated with a respective wheel 45 of the cover 41. As will be appreciated, the cover 41 is closed by rolling horizontally along the channels 52a,53a before being biased by means of the inclined portions 52b,53b downwardly and against the rubber seal 42 around the aperture 40. Opening is the reverse operation.

In the embodiment shown, the cover 41 is manually operated and secured into either the open or closed positions by means of a bolt 60 mounted upon the cover 41 engaging corresponding front 61 and rear 62 recesses formed in the channel assembly 50. However, in the preferred embodiments, the cover 41 is remotely operated, such as by means of a hydraulic or pneumatic ram coupled to the cover or by means of an electric motor. In such cases, the inclusion of a bolt is unnecessary.

Within the trailer is transverse wall or headboard 70 (Figures 4 and 7) which is arranged by suitable means to be advanceable towards the rear wall 17 of the trailer in the direction shown by the arrow in Figure 4. The headboard 70 divides the container 13 to form a cavity 71 with the trailer (namely with the doors 12). Attached to the headboard 70 at its lower edge is a strong canvas sheet 72. The canvas sheet 72 is dimensioned such that when the headboard 70 is in its initial position just rearward of the aperture 40 (as shown in Figure 4), the canvas extends from the headboard to the doors 12 of the trailer. Thus the area of the canvas sheet 72 corresponds with the initial floor area of the cavity 71.

The floor of the trailer is provided with a walking floor 73 of the type described above. The walking floor comprises a series of parallel longitudinal slats 74. The slats 74 are arranged to move back and forth with a reciprocating motion, alternate slats 74 moving in opposite directions. Such floors are well known in the art and will not be described in any further detail.

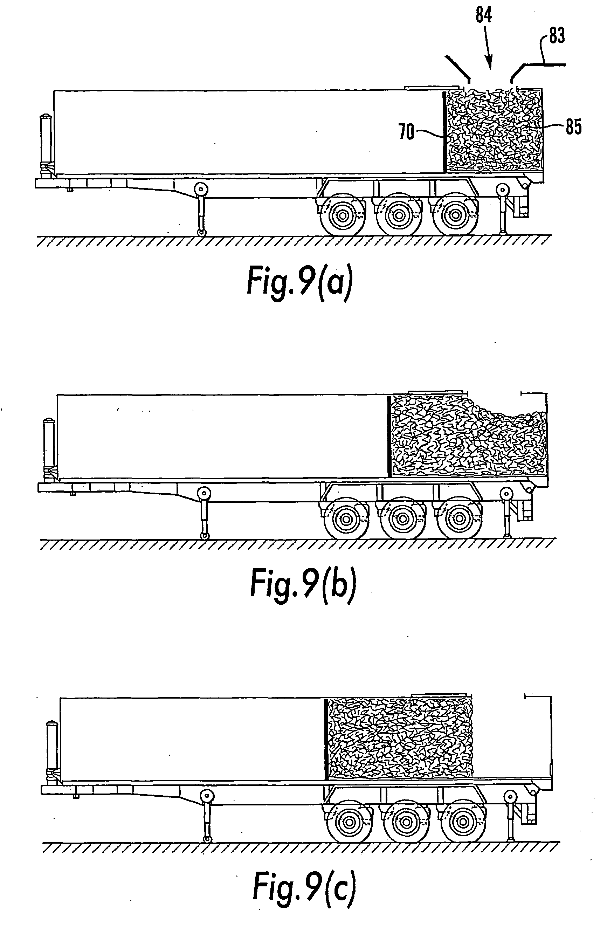

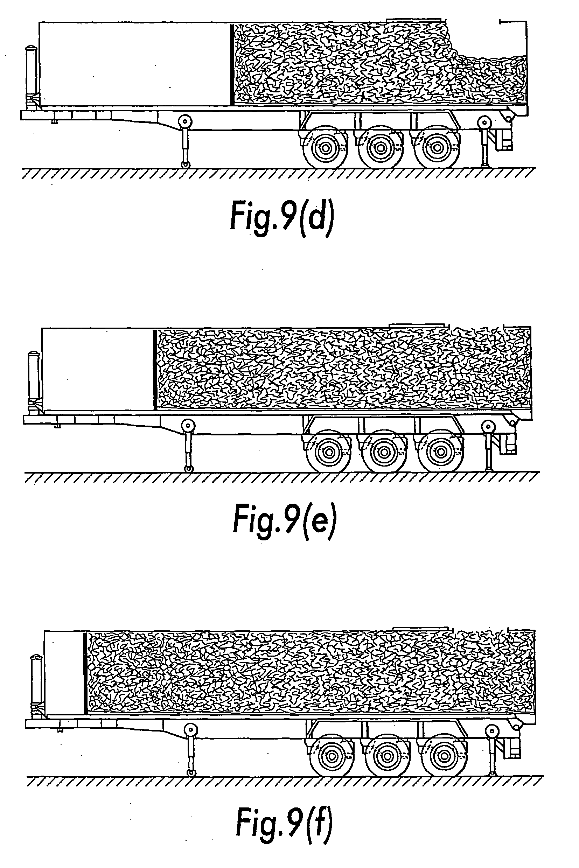

With particular reference to Figures 8 and 9, the process of the present invention will now be explained. A lorry comprising a tractor unit 10 and a first trailer 11 A carrying newsprint reels 80 reverses up to a loading bay 81, of a printing works 82 whereupon the reels are unloaded through doors 12 by means of the walking floor. Newspaper waste is removed from the printing process and delivered along a discharge pathway 83 (which is illustrated only schematically) to a hopper 84. Hopper 84 discharges into a second trailer 11B of identical design to first trailer 11A, positioned underneath the hopper 84 through open aperture 40 of the hatch in the roof 16 of trailer 11B. Second trailer 11B remains in place on site at the printing works whilst the discharging process is ongoing.

The process operates as follows. A fully laden lorry arrives and discharges its load. It then proceeds to the waste exit area of the works 82 where the tractor unit deposits the now empty trailer under the hopper 84 for receipt of waste material and retrieves the filled trailer which it then returns to its home depot or elsewhere for disposal. The process is repeated on each subsequent visit.

In a typical arrangement, however, the printing works 82 will have several hoppers 84 with associated discharge pathways 83.

Initially, the transverse headboard 70 will be at the position indicated in Figures 4, 7 and 9a. The hopper 84 discharges waste paper 85 though open aperture 40 into the cavity 71 of the trailer where it falls upon the canvas sheet 72. Being attached to the base of the headboard 70, the weight of waste 85 falling on the canvas sheet 72 acts to prevent the headboard being pushed towards the rear of the trailer as the mass of waste 85 accumulates.

As cavity 71 becomes full, one or more sensors (not shown) mounted about the aperture 40 trigger a control mechanism which actuates the walking floor 73 for a predetermined time to move the contents of the cavity 71 towards the rear wall 17 thereby enlarging cavity 71 (Figure 9b). It has been found that with waste paper from a newspaper printing works the weight of the paper is sufficient to compact the mass of waste 85 such that as the mass is advanced towards the rear of the container 13 the mass retains its generally cuboid shape (see Figure 9c). The forward face of the mass 85 does not collapse once it is moved away from contact with the doors 12 of the trailer.

The process is repeated (Figures 9a-e) with the headboard 70 indexing backwardly towards the rear wall 17 of the trailer until the container 13 is substantially full (Figure 9f). Typically, this will involve 5 or 6 indexing steps, but this will depend upon the dimensions of the trailer.

The hatch is then closed and the trailer is then ready to be collected on the next visit of the lorry delivering newsprint At the site where the waste paper is to be discharged, for example at a landfill site or recycling plant, the trailer discharges the waste by means of the walking floor operating in the reverse direction or by means of tipping the container about pivot point 20 by means of ram 25. During discharging, the canvas sheet 72 attached to the bottom edge of the headboard 70 acts to pull the headboard 70 towards the front of the trailer as the waste is discharged.

Whilst attached to the tractor unit 10, the walking floor 73 and the cover 41 closing assembly can be powered by the tractor unit. However, when detached from the tractor unit 10, these components will be powered by means of an on-site power plant at the works 82.

The present invention reduces the number of on site operations required, avoids the need for raising and lowering heavy containers loaded with waste materials and allows removal of waste to be effected in a straightforward, quick, efficient and cost-effective manner. The present invention also significantly reduces road movements, in ideal cases by 50%. Additionally, in the preferred embodiment, the safety of road delivery is enhanced by the metal construction of the trailer. Furthermore, the present invention can result in capital cost savings by avoiding the need for compactors at the production site, and their ongoing running and maintenance costs. Whilst having been described with reference to the paper industries, it will be appreciated that the aspects of the present invention are equally suitable for use in other industries, for example in removal of clinical waste. As during use, access into the container is solely via the hatch in the roof, the present invention provides improved hazard security and safety.

## Claims

1. A material delivery and waste collection system for a premises (82); the system comprising (i) providing a wheeled, enclosed elongate material-carrying container (11) having a walking floor (73), walls (14, 17), a roof (16) and an access door (12), (ii) providing the premises (82) with a delivery bay (81) for transfer of materials from the container (11) into the premises (82); and (iii) providing the premises (82) with at least one waste collection bay for subsequent transfer of waste materials from the premises (82) into the container (11), wherein the waste collection bay includes an output (84) for expulsion of the waste material into the container (11), the waste collection bay being adapted to permit the container (11) to be positioned underneath the output (82) whereby the waste material falls from the output (84) downwardly into the container (11) through the roof (16) of the container (11).

2. A system as claimed in Claim 1 wherein the waste collection bay is adapted so as to permit the container (11) to be positioned underneath the output (84) whereby the waste material falls from the output (84) downwardly into the container (11) through the roof (16) of the container (11) generally adjacent the access door (12).

3. A system as claimed in Claim 1 or Claim 2 wherein the container is an articulated lorry trailer (11) and is carried upon a chassis (21) having a plurality of road wheels (22); wherein the access door (12) is a front access door (12) and the walls include a rear wall (17) and two side walls (14), the interior surfaces of the container (13) being substantially flat; wherein the interior of the container (11) includes a transverse movable wall or headboard (70) defining a cavity (71) between the said movable wall or headboard (70) and the front access door (12) wherein the movable wall or headboard (70) is advanceable between a first position adjacent the access door (12) wherein the capacity of the cavity (71) is at a minimum and a second position remote the access door (12) in which the capacity of the cavity (71) is at a maximum, whereby the waste material is arranged to fall from the output (84) downwardly into the cavity (71); and wherein the walking floor (73) is arranged to cause longitudinal transport of waste material which has fallen into the cavity (71) from the output (84).

4. A system as claimed in Claim 3 wherein a sheet (72) is attached to the bottom edge of the movable wall or headboard (70) and extends along the floor (15) towards the access door (12).

5. A system as claimed in Claim 3 or Claim 4, wherein the container (11) further comprises a control mechanism for actuating the walking floor (73) for a predetermined time to move the contents of the cavity (71) towards the rear wall (17) thereby enlarging cavity (71), and one or more sensors for triggering the control mechanism as the cavity (71) becomes full.

6. A system as claimed in Claim 5 wherein control mechanism is adapted to actuate the walking floor (73) whereby the movable wall or headboard (70) indexes backwardly towards the rear wall (17) of the container (11).

7. A system as claimed in any one of Claims 3 to 6 further comprising an on-site power plant at the premises (82) for powering the walking floor (73).

8. An articulated lorry trailer (11) comprising an enclosed elongate material-carrying container (13) carried upon a chassis (21) having a plurality of road wheels (22); the container having a floor (15), a front access door (12), a rear wall (17) and two side walls (14), and a roof (16), the interior surfaces of the container (13) being substantially flat; wherein the interior of the container (11) includes a transverse movable wall or headboard (70) defining a cavity (71) between the said movable wall or headboard (70) and the front access door (12) wherein the movable wall or headboard (70) is advanceable between a first position adjacent the access door (12) wherein the capacity of the cavity (71) is at a minimum and a second position remote the access door (12) in which the capacity of the cavity (71) is at a maximum, the roof (16) permitting material from an output (84) positioned, in use, above the cavity (71) at a location generally adjacent the access door (12) to fall from the output (84) downwardly into the cavity (71) through the roof (16); and the container further comprising a walking floor (73) arranged to cause longitudinal transport of waste material which has fallen into the cavity (71).

9. A trailer as claimed in Claim 8 wherein a sheet (72) is attached to the bottom edge of the movable wall or headboard (70) and extends along the floor (15) towards the access door (12).

10. A trailer as claimed in Claim 8 or Claim 9, wherein the container (11) further comprises a control mechanism for actuating the walking floor (73) for a predetermined time to move the contents of the cavity (71) towards the rear wall (17) thereby enlarging cavity (71), and one or more sensors for triggering the control mechanism as the cavity (71) becomes full.

11. A trailer as claimed in Claim 10 wherein control mechanism is adapted to actuate the walking floor (73) whereby the movable wall or headboard (70) indexes backwardly towards the rear wall (17) of the container (11).

12. A trailer as claimed in any one of Claims 8 to 11 wherein the walking floor (73) is arranged to be powered from a power plant at a premises (82).
